# EUROPÄISCHE PATENTSCHRIFT

(11) **EP 2 909 470 B1**
(45) Veröffentlichungstag und Bekanntmachung des Hinweises auf die Patenterteilung: **29.08.2018**
(21) Anmeldenummer: 13779849.2
(22) Anmeldetag: 22.10.2013
(51) Int. Cl.: F03D 1/00

(54) **ARBEITSBÜHNE UM DIE SCHRAUBVERBINDUNGEN VON WINDENERGIEANLAGEN-TURMSEGMENT-TEILEN ZU ÜBERPRÜFEN**
WORK CAGE FOR CHECKING THE BOLTED CONNECTIONS BETWEEN WIND TURBINE TOWER SEGMENTS
PLATE-FORME DE TRAVAIL POUR VÉRIFIER LES CONNECTIONS BOULONNÉES D'ELÉMENTS DE TOUR D'ÉOLIENNE

(30) Priorität: 22.10.2012 DE 102012020687; 13.05.2013 DE 102013208760
(43) Veröffentlichungstag der Anmeldung: 26.08.2015
(73) Patentinhaber: Wobben Properties GmbH, 26607 Aurich (DE)
(72) Erfinder: POLLMANN, Frank, 22391 Hamburg (DE); GRÖß, Alexander, 26409 Wittmund (DE)
(74) Vertreter: Eisenführ Speiser
(86) Internationale Anmeldenummer: PCT/EP2013/072015
(87) Internationale Veröffentlichungsnummer: WO 2014/064069

(56) Entgegenhaltungen:
- WO-A1-2004/092577
- WO-A1-2007/082531
- WO-A1-2010/112032
- DE-C1- 19 726 408

## Beschreibung

Die vorliegende Erfindung betrifft eine Windenergieanlage und einen Windenergieanlagen-Turm.

Die Türme von Windenergieanlagen werden typischerweise aus verschiedenen Segmenten aufgebaut. Die Segmente können miteinander verschraubt werden. Ferner können die Segmente durch Spannseile miteinander verspannt werden.

DE 10 2010 005 991 A1 zeigt einen Turm einer Windenergieanlage, wobei der Turm aus mehreren Segmenten bzw. Turmschüssen aufgebaut ist. Ein Turmsegment bzw. ein Turmschuss kann aus mehreren Teilen bestehen. Diese Teile können an den Stoßflächen Verbindungskörper in den Nischen in den Turmschüssen vorgesehen sein, wobei die Verbindungskörper zum Verbinden von zwei Teilen eines Turmschusses verwendet werden.

Die Verschraubungen an den Turmsegmenten bzw. Turmschüssen müssen vom Wartungspersonal kontrolliert werden können. Insbesondere bei einer 300h-Wartung kann es vorkommen, dass die Verschraubungen kontrolliert werden.

Das Kontrollieren dieser Verschraubungen ist jedoch sehr zeitaufwendig. Bei der Überprüfung der Schraubverbindungen in bzw. an dem Turm muss berücksichtigt werden, dass der Turm einer Windenergieanlage über 100m hoch sein kann. Beim Turm einer Windenergieanlage kann es vorkommen, dass die zu überprüfenden Schraubverbindungen voneinander entfernt sind, so dass eine Überprüfung durch Wartungspersonal sehr aufwendig sein kann. Zur Wartung der Schraubverbindungen können beispielsweise Steigleitern an der Innenwandung des Turms vorgesehen sein. Des Weiteren können Stehpodeste an der Innenwandung des Turms vorgesehen sein.

Es ist daher eine Aufgabe der vorliegenden Erfindung, eine Windenergieanlage und einen Windenergieanlagen-Turm vorzusehen, welcher eine effiziente Überprüfung der Verschraubungen der Turmschüsse ermöglicht.

Diese Aufgabe wird durch eine Windenergieanlage nach Anspruch 1 sowie durch einen Windenergieanlagenturm nach Anspruch 6 gelöst.

Somit wird eine Windenergieanlage mit einem Turm vorgesehen, welcher eine Mehrzahl von Turmsegmenten aufweist. Einige der Turmsegmente sind aus einer Mehrzahl von Turmsegmentteilen aufgebaut. Die Turmsegmentteile sind über Schraubverbindungen miteinander befestigt. Die Windenergieanlage weist ferner mindestens ein sich zumindest teilweise entlang der Länge des Turms erstreckendes Führungsseil auf. Die Windenergieanlage weist ebenfalls eine Arbeitsbühne auf, welche mit dem Führungsseil zur Führung befestigbar ist und über ein Fahrseil nach oben und unten bewegt werden kann. Damit können die Schraubverbindungen von benachbarten Turmsegmentteilen überprüft werden.

Gemäß einem Aspekt der vorliegenden Erfindung weist die Arbeitsbühne ein Gegengewicht auf, welches an dem Fahrseil befestigt werden kann.

Gemäß einem weiteren Aspekt der vorliegenden Erfindung wird die Arbeitsbühne über ein Spannungskabel mit Energie versorgt.

Gemäß einem Aspekt der vorliegenden Erfindung erstrecken sich die Führungsseile im Bereich der Schraubverbindungen der Turmsegmentteile.

Die Erfindung betrifft ebenfalls einen Windenergieanlagenturm mit einer Mehrzahl von Turmsegmenten. Zumindest ein Turmsegment weist eine Mehrzahl von Turmsegmentteilen auf. Die Turmsegmentteile können über Schraubverbindungen miteinander befestigt werden. Der Turm weist ferner mindestens ein zumindest teilweise sich entlang der Länge des Turms erstreckendes Führungsseil auf. Der Turm weist ferner eine Arbeitsbühne auf, welche mit dem Führungsseil befestigbar ist und über ein Fahrseil nach oben und unten bewegt werden kann, um Schraubverbindungen von benachbarten Turmsegmentteilen zu überprüfen.

Gemäß der Erfindung weist der Turm der Windenergieanlage zumindest ein Turmsegment auf, welches längsgeteilt ist, d. h. das Turmsegment besteht aus mehreren Turmsegmentabschnitten bzw. -teilen, welche zusammengesetzt werden, um das Turmsegment auszubilden.

Weitere Ausgestaltungen der Erfindung sind Gegenstand der Unteransprüche.

Vorteil und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2: zeigt eine schematische Schnittansicht eines Turms einer Windenergieanlage gemäß einem ersten Ausführungsbeispiel,
- Fig. 3: zeigt eine schematische Ansicht einer Arbeitsbühne gemäß einem ersten Ausführungsbeispiel, und
- Fig. 4: zeigt eine schematische Ansicht eines Teils eines Turms einer Windenergieanlage gemäß einem zweiten Ausführungsbeispiel.

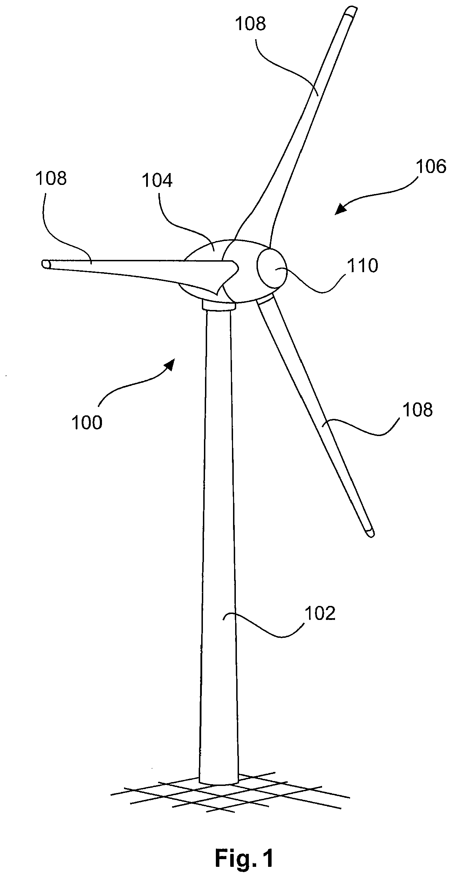

Fig. 1 zeigt eine schematische Darstellung einer Windenergieanlage gemäß der Erfindung. Die Windenergieanlage 100 weist einen Turm 102 und eine Gondel 104 auf. An der Gondel 104 ist ein Rotor 106 mit drei Rotorblättern 108 und einem Spinner 110 vorgesehen. Der Rotor 106 wird im Betrieb durch den Wind in eine Drehbewegung versetzt und dreht somit auch den Rotor oder Läufer des Generators in der Gondel 104. Der Pitchwinkel der Rotorblätter 108 kann durch Pitchmotoren an den Rotorblattwurzeln der jeweiligen Rotorblätter 108 verändert werden.

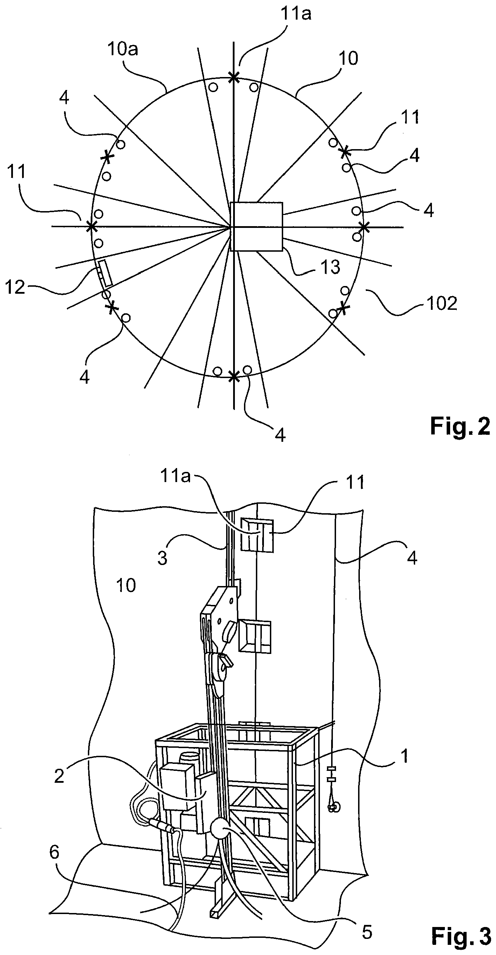

Fig. 2 zeigt eine schematische Schnittansicht eines Turms einer Windenergieanlage gemäß einem ersten Ausführungsbeispiel. Der Turm 102 der Windenergieanlage weist eine Turmwandung 10 auf. Der Turm 102 der Windenergieanlage besteht aus einer Mehrzahl von Turmsegmenten bzw. Turmschüssen. Diese Turmsegmente werden aufeinander platziert, um den Turm 102 der Windenergieanlage auszubilden. Insbesondere im unteren Bereich kann es vorkommen, dass ein Turmsegment aus einer Mehrzahl von Turmsegment-Teilen 10a zusammen gesetzt wird. Die Turmsegment-Teile 10a werden an ihren Stoßflächen 11 miteinander befestigt. Die Stoßflächen 11 können Schraubfugen 11a aufweisen. Die Stoßflächen erstrecken sich in Längsrichtung des Turms. Die Schraubfugen 11a benachbarter Turmsegment-Teile 10a werden mittels Schraubverbindungen aneinander befestigt. Diese Schraubverbindungen müssen z. B. nach Inbetriebnahme der Windenergieanlage z.B. nach einer 300h-Wartung überprüft werden.

Der Turm 102 der Windenergieanlage kann optional einen Personenlift bzw. eine Aufstiegshilfe 13 aufweisen, der von dem Wartungspersonal verwendet wird, um in die Gondel 104 z.B. zu Wartungszwecken zu gelangen. Mittels dieses Personenlifts bzw. der Aufstiegshilfe 13 ist jedoch nicht möglich, die Schraubverbindungen der Schraubfugen 11a an den Stoßstellen 11 zu überprüfen.

Der Turm 102 der Windenergieanlage weist ferner an seiner Innenwandung eine Steigleiter 12 auf, mittels welcher das Wartungspersonal ebenfalls in die Gondel der Windenergieanlage oder in Zwischenabschnitte oder Zwischenpodeste in dem Turm 102 der Windenergieanlage gelangen kann. Mittels dieser Steigleiter 12 ist es dem Wartungspersonal ebenfalls nicht möglich, alle Schraubverbindungen der Schraubfugen 11a zu überprüfen.

Die Schraubverbindungen der Schraubfugen können ebenfalls als Schraubkästen ausgebildet sein. Im Bereich der Schraubkästen oder Schraubfugen können Führungsseile 4 vorgesehen sein. Die Führungsseile 4 dienen dazu, eine in Fig. 3 gezeigte Arbeitsbühne oder Aufstiegshilfe zu führen. Die Führungsseile 4 können sich vom Boden des Turms der Windenergieanlage oder von einem Zwischenpodest in den Turmkopf 102a oder bis zu einem Zwischenpodest erstrecken, das in einem der höheren Turmsegmente befestigt ist. Alternativ bzw. zusätzlich dazu können die oberen Enden der Führungsseile 4 auch direkt an der Turmwandung befestigt werden. Die Führungsseile 4 können optional nach Errichtung des Turms der Windenergieanlage installiert bleiben und können auch nach der 300h-Wartung im Turm verbleiben.

Fig. 3 zeigt eine schematische Darstellung einer Arbeitsbühne in einem Turm einer Windenergieanlage gemäß dem ersten Ausführungsbeispiel. Eine Arbeitsbühne 1 weist einen Motor 2 auf, mittels welchem die Arbeitsbühne 1 entlang eines Fahrseiles 3 nach oben oder unten befördert werden kann. Ein Gegengewicht 5 kann an dem Fahrseil 3 befestigt werden. Die Arbeitsbühne 1 kann über ein Spannungskabel 6 mit Energie versorgt werden.

Mittels der Arbeitsbühne 1 bzw. Aufstiegshilfe kann ein Monteur bzw. Wartungspersonal an die jeweiligen Schraubverbindungen gelangen, um diese zu überprüfen.

Damit müssen nicht allen Stellen, wo Schraubfugen 11a vorgesehen sind, auch Steigleitern befestigt werden, damit diese Schraubfugen bzw. Schraubverbindungen gewartet werden können. Vielmehr muss lediglich mindestens ein Führungsseil 4 an den entsprechenden Stellen vorgesehen sein. Die Arbeitsbühne 1 kann an den anderen Stellen der Schraubfügen wieder verwendet werden.

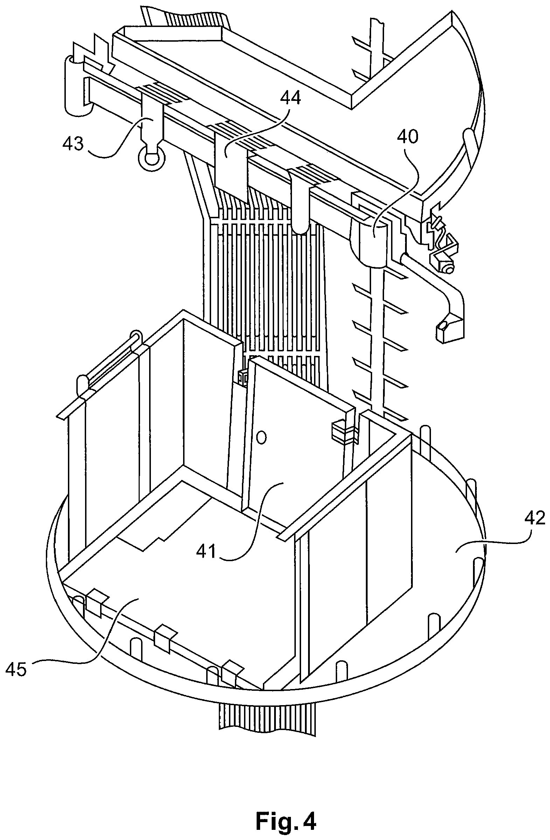

Fig. 4 zeigt eine schematische Darstellung eines Teils eines Turms einer Windenergieanlage gemäß einem zweiten Ausführungsbeispiel. Die Windenergieanlage gemäß dem zweiten Ausführungsbeispiel kann auf der Windenergieanlage gemäß dem ersten Ausführungsbeispiel beruhen. In Fig. 4 ist insbesondere eine Traverse 40 gezeigt, welche innerhalb des Turms befestigt ist. Die Führungsseile 4 können hierbei an der Traverse 40 befestigt werden. Beispielsweise können die Führungsseile 4 und/oder die Fahrseile 3 an den äußeren Enden der Traverse 40 befestigt werden.

In Fig. 4 ist ebenfalls eine Befestigungseinheit 43 zur Befestigung der Personalkorbhalterung und eine Befestigungseinheit 44 zur Befestigung für die Lifthalterung an der Traverse vorgesehen. Des Weiteren ist ein Ausstiegspodest 42 sowie ein Liftausstieg im Turmkopf 41 und eine Liftdurchführung 45 gezeigt.

Gemäß der Erfindung wird mindestens ein Führungsseil 4 zur Führung der Arbeitsbühne benötigt. Optional kann jedoch auch mehr als ein Führungsseil verwendet werden.

Optional können die Führungs- und/oder Fahrseile so in bzw. an dem Turm der Windenergieanlage befestigt werden, dass das Wartungspersonal alle Schraubfugen mit den dazugehörigen Schraubverbindungen insbesondere an den Stoßstellen der Turmsegmentteile überprüfen kann. Da typischerweise lediglich die unteren Turmsegmente aus mehreren Turmsegmentteilen bestehen, müssen die Führungs- und/oder Fahrseile nicht bis zum Turmkopf geführt werden. Optional können die Fahr- und/oder Führungsseile 3, 4 an denjenigen Turmsegmenten befestigt werden, welche oberhalb des Turmsegmentes angeordnet sind, das aus einer Mehrzahl von Turmsegmenten aufgebaut ist.

## Patentansprüche

1. Windenergieanlage, mit
einem Turm (102), welcher eine Mehrzahl von Turmsegmenten aufweist,
wobei zumindest ein Turmsegment der Mehrzahl der Turmsegmente aus einer Mehrzahl von Turmsegment-Teilen (10a) aufgebaut ist,
wobei die Turmsegment-Teile (10a) über Schraubverbindungen miteinander befestigbar sind,
wobei die Turmsegment-Teile (10a) Stoßflächen (11) aufweisen, welche sich in einer Längsrichtung des Turms (102) erstrecken,
einer Mehrzahl von sich zumindest teilweise entlang der Länge des Turmes und innerhalb des Turms erstreckenden Führungsseilen (4), und
mindestens einem sich entlang der Länge des Turms und innerhalb des Turms erstreckenden Fahrseils (3),
einer Arbeitsbühne (1), welche an einem der Mehrzahl der Führungsseile (4) und dem Fahrseil (3) befestigbar ist und entlang des Fahrseils (3) nach oben oder unten verfahrbar ist,
wobei die Führungsseile (4) sich im Bereich der Schraubverbindungen der Turmsegment-Teile erstrecken, so dass die Arbeitsbühne (1) in die Nähe der Schraubverbindungen gefahren werden kann,
wobei die Führungsseile (4) zumindest an ihren Enden an dem Turm (102) befestigt sind.

2. Windenergieanlage nach Anspruch 1, wobei
die Arbeitsbühne (1) ein Gegengewicht (5) aufweist, welches an dem Fahrseil (3) befestigt ist.

3. Windenergieanlage nach einem der Ansprüche 1 oder 2, wobei
die Arbeitsbühne (1) über ein Spannungskabel (6) mit Energie versorgt wird.

4. Windenergieanlagen-Turm, mit
einer Mehrzahl von Turmsegmenten, wobei zumindest ein Turmsegment der Mehrzahl der Turmsegmente aus einer Mehrzahl von Turmsegment-Teilen (10a) aufgebaut ist,
wobei die Turmsegment-Teile (10a) über Schraubverbindungen miteinander befestigt sind,
wobei die Turmsegment-Teile (10a) Stoßflächen (11) aufweisen, welche sich in einer Längsrichtung des Turms (102) erstrecken,
einer Mehrzahl von sich zumindest teilweise entlang der Länge des Turmes und innerhalb des Turms erstreckenden Führungsseilen (4),
mindestens einem sich entlang der Länge des Turms und innerhalb des Turms erstreckenden Fahrseils (3),
einer Arbeitsbühne (1), welche an einem der Mehrzahl der Führungsseile (4) und dem Fahrseil (3) befestigbar ist, und entlang des Fahrseils (3) nach oben oder unten verfahrbar ist,
wobei die Führungsseile (4) sich im Bereich der Schraubverbindungen der Turmsegment-Teile erstrecken, so dass die Arbeitsbühne (1) in die Nähe der Schraubverbindungen gefahren werden kann,
wobei die Führungsseile (4) zumindest an ihren Enden an dem Turm (102) befestigt sind.

5. Verfahren zum Überprüfen von Schraubverbindungen von benachbarten Turmsegment-Teilen (10a) eines Turms einer Windenergieanlage, wobei der Windenergieanlagen-Turm (102) eine Mehrzahl von Turmsegmenten aufweist, wobei zumindest ein Turmsegment der Mehrzahl der Turmsegmente aus einer Mehrzahl von Turmsegment-Teilen (10a) aufgebaut ist, mit den Schritten:
Vorsehen mindestens eines sich zumindest teilweise entlang der Länge des Turms und innerhalb des Turms erstreckenden Führungsseils (4), wobei das mindestens eine Führungsseil (4) sich im Bereich der Schraubverbindungen der Turmsegment-Teile erstreckt,
Vorsehen mindestens eines sich zumindest teilweise entlang der Länge des Turms und innerhalb des Turms erstreckenden Fahrseils (3), und
Befestigen einer Arbeitsbühne (1) an dem Führungsseil (4) und dem Fahrseil (3),
Verfahren der Arbeitsbühne entlang des Führungsseils (4) und des Fahrseils (3), so dass die Arbeitsbühne (1) in die Nähe der Schraubverbindungen verfahrbar ist,
wobei die Turmsegment-Teile (10a) Stoßflächen (11) aufweisen, welche sich in einer Längsrichtung des Turms (102) erstrecken,
wobei die Führungsseile (4) sich im Bereich der Schraubverbindungen der Turmsegment-Teile erstrecken, so dass die Arbeitsbühne (1) in die Nähe der Schraubverbindungen gefahren werden kann,
wobei die Führungsseile (4) zumindest an ihren Enden an dem Turm (102) befestigt sind.

## Claims

1. A wind power installation comprising
a pylon (102) which has a plurality of pylon segments,
wherein at least one pylon segment of the plurality of the pylon segments is made up from a plurality of pylon segment parts (10a),
wherein the pylon segment parts (10a) can be fixed together by way of screw connections,
wherein the pylon segment parts (10a) have abutting surfaces (11) which extend in a longitudinal direction of the pylon (102),
a plurality of guide cables (4) extending at least partially along the length of the pylon and inside the pylon, and
at least one travel cable (3) extending along the length of the pylon and inside the pylon,
a working platform (1) which is fixed to one of the plurality of guide cables (4) and the travel cable (3) and which can be moved upwardly and downwardly by way of a travel cable (3),
wherein the at least one guide cable (4) extends in the region of the screw connections of the pylon segment parts so that the working platform (1) can be moved adjacent to the screw connections,
wherein the guide cable (4) is coupled at one of its ends to the pylon (102).

2. A wind power installation according to claim 1 wherein the working platform (1) has a counterweight (5) fixed to the travel cable (3).

3. A wind power installation according to one of claims 1 and 2 wherein the working platform (1) is supplied with power by way of a voltage cable (6).

4. A wind power installation pylon comprising
a plurality of pylon segments, wherein at least one pylon segment of the plurality of the pylon segments is made up from a plurality of pylon segment parts (10a),
wherein the pylon segment parts (10a) are fixed together by way of screw connections,
wherein the pylon segment parts (10a) have abutting surfaces (11) which extend in a longitudinal direction of the pylon (102),
a plurality of guide cables (4) extending at least partially along the length of the pylon and inside the pylon, and
at least one travel cable (3) extending along the length of the pylon (102) and inside the pylon (102),
a working platform (1) which is fixed to one of the plurality of guide cables (4) and the at least one travel cable (3) and which can be moved upwardly and downwardly by way of a travel cable (3),
wherein the at least one guide cable (4) extends in the region of the screw connections of the pylon segment parts so that the working platform (1) can be moved adjacent to the screw connections,
wherein the guide cable (4) is coupled at one of its ends to the pylon (102).

5. Method of checking screw connections of adjacent pylon segment parts (10a) of a pylon of a wind power installation, wherein the wind power installation pylon (102) comprises a plurality of pylon segments, wherein at least one pylon segment of the plurality of pylon segments is made up from a plurality of pylon segment parts (10a), comprising the steps of
providing at least one guide cable extending at least partially along the length of the pylon and inside the pylon wherein the at least one guide cable (4) extends and in the region of the screw connections of the pylon segment parts,
providing at least one travel cable (3) extending at least partially along the length of the pylon (102) and inside the pylon, and
fixing a working platform (1) to the at least one guide cable (4) and at least one travel cable (3),
moving the working platform (1) along guide cable (4) and the travel cable (3) such that the working platform is moved adjacent to the screw connection,
wherein the pylon segment parts (10a) have abutting surfaces (11) which extend in a longitudinal direction of the pylon (102),
wherein the at least one guide cable (4) extends in the region of the screw connections of the pylon segment parts so that the working platform (1) can be moved adjacent to the screw connections,
wherein the guide cable (4) is coupled at one of its ends to the pylon.

## Revendications

1. Eolienne avec
une tour (102), qui présente une multitude de segments de tour,
dans laquelle au moins un segment de tour de la multitude des segments de tour est fabriqué à partir d'une pluralité de parties de segment de tour (10a),
dans laquelle les parties de segment de tour (10a) peuvent être fixées les unes aux autres par l'intermédiaire de raccords à vis,
dans laquelle les parties de segment de tour (10a) présentent des surfaces d'about (11), qui s'étendent dans une direction longitudinale de la tour (102),
une multitude de câbles de guidage (4) s'étendant au moins en partie le long de la longueur de la tour et à l'intérieur de la tour, et
au moins un câble mobile (3) s'étendant le long de la longueur de la tour et à l'intérieur de la tour,
une plate-forme de travail (1), qui peut être fixée au niveau d'un de la multitude des câbles de guidage (4) et du câble mobile (3) et peut être déplacée le long du câble mobile (3) vers le haut ou le bas,
dans laquelle les câbles de guidage (4) s'étendent dans la zone des raccords à vis des parties de segment de tour si bien que la plate-forme de travail (1) peut être déplacée à proximité des raccords à vis,
dans laquelle les câbles de guidage (4) sont fixés au moins au niveau de leurs extrémités au niveau de la tour (102).

2. Eolienne selon la revendication 1, dans laquelle
la plate-forme de travail (1) présente un contrepoids (5), qui est fixé au niveau du câble mobile (3) .

3. Eolienne selon l'une quelconque des revendications 1 ou 2, dans laquelle
la plate-forme de travail (1) est alimentée en énergie par l'intermédiaire d'un câble de tension (6).

4. Tour d'éolienne avec
une multitude de segments de tour, dans laquelle au moins un segment de tour de la multitude des segments de tour est fabriqué à partir d'une pluralité de parties de segment de tour (10a),
dans laquelle les parties de segment de tour (10a) sont fixées les unes aux autres par l'intermédiaire de raccords à vis,
dans laquelle les parties de segment de tour (10a) présentent des surfaces d'about (11), qui s'étendent dans une direction longitudinale de la tour (102),
une multitude de câbles de guidage (4) s'étendant au moins en partie le long de la longueur de la tour et à l'intérieur de la tour,
au moins un câble mobile (3) s'étendant le long de la longueur de la tour et à l'intérieur de la tour,
une plate-forme de travail (1), qui peut être fixée au niveau d'un de la multitude des câbles de guidage (4) et le câble mobile (3) et peut être déplacée le long du câble mobile (3) vers le haut ou le bas,
dans laquelle les câbles de guidage (4) s'étendent dans la zone des raccords à vis des parties de segment de tour de sorte que la plate-forme de travail (1) peut être déplacée à proximité des raccords à vis,
dans laquelle les câbles de guidage (4) sont fixés au moins au niveau de leurs extrémités au niveau de la tour (102).

5. Procédé servant à vérifier des raccords à vis de parties de segment de tour (10a) adjacentes d'une tour d'une éolienne, dans lequel la tour d'éolienne (102) présente une multitude de segments de tour, dans lequel au moins un segment de tour de la multitude des segments de tour est fabriqué à partir d'une multitude de parties de segment de tour (10a), avec les étapes :
de prévision d'au moins un câble de guidage (4) s'étendant au moins en partie le long de la longueur de la tour et à l'intérieur de la tour, dans lequel l'au moins un câble de guidage (4) s'étend dans la zone des raccords à vis des parties de segment de tour,
prévision d'au moins un câble mobile (3) s'étendant au moins en partie le long de la longueur de la tour et à l'intérieur de la tour, et
fixation d'une plate-forme de travail (1) au niveau du câble de guidage (4) et du câble mobile (3),
déplacement de la plate-forme de travail le long du câble de guidage (4) et du câble mobile (3) si bien que la plate-forme de travail (1) peut être déplacée à proximité des raccords à vis,
dans laquelle les parties de segment de tour (10a) présentent des surfaces d'about (11), qui s'étendent dans un sens longitudinal de la tour (102),
dans lequel les câbles de guidage (4) s'étendent dans la zone des raccords à vis des parties de segment de tour si bien que la plate-forme de travail (1) peut être déplacée à proximité des raccords à vis,
dans laquelle les câbles de guidage (4) sont fixés au moins au niveau de leurs extrémités au niveau de la tour (102).
